# EUROPÄISCHE PATENTSCHRIFT

(11) **EP 4 534 858 B1**
(45) Veröffentlichungstag und Bekanntmachung des Hinweises auf die Patenterteilung: **09.12.2026**
(21) Anmeldenummer: 24204606.8
(22) Anmeldetag: 04.10.2024
(51) Int. Cl.: F16B 2/22, F16B 9/00, F16B 21/07, B60K 11/04

(54) **SCHNAPPVERBINDUNG, KRAFTFAHRZEUGSTRUKTUR SOWIE KRAFTFAHRZEUG**
SNAP-FIT CONNECTION, MOTOR VEHICLE STRUCTURE AND MOTOR VEHICLE
RACCORD ENCLIQUETABLE, STRUCTURE DE VÉHICULE AUTOMOBILE ET VÉHICULE AUTOMOBILE

(30) Priorität: 05.10.2023 DE 102023127187
(43) Veröffentlichungstag der Anmeldung: 09.04.2025
(73) Patentinhaber: Vibracoustic SE, 69469 Weinheim (DE)
(72) Erfinder: Bröker, Rolf, 79100 Freiburg (DE); Kist, Markus, Bantzenheim (FR); Paul, Christian, 79424 Auggen (DE); Gutmann, Joschka, 79219 Staufen im Breisgau (DE)
(74) Vertreter: Patentanwälte Olbricht Buchhold Keulertz

(56) Entgegenhaltungen:
- EP-A1- 3 098 372

## Beschreibung

Die Erfindung betrifft eine Schnappverbindung, eine Kraftfahrzeugstruktur sowie ein Kraftfahrzeug.

Schnappverbindungen, Kraftfahrzeugstrukturen sowie Kraftfahrzeuge der eingangs genannten Art sind im Allgemeinen bekannt. Entsprechende Schnappverbindungen haben mehrere Funktionen. Einerseits müssen sie eine schnelle Montage von Aggregaten und Komponenten ermöglichen, bevorzugt ohne übermäßig große Montagekräfte, oftmals, um von Mechanikern handmontiert zu werden. Andererseits sollen sie aber bei gewöhnlichen einwirkenden Kräften zuverlässig halten.

Der EP 3 098 372 A1 ist ein Befestigungselement für eine Komponente an einem Kraftfahrzeug zu entnehmen. Das Befestigungselement weist einen ersten und einen zweiten Befestigungsabschnitt auf, wobei der erste Befestigungsabschnitt ein als Schnappelement ausgestaltetes Eingriffselement aufweist, welches mit einem Gegen-Eingriffselement zwecks der Befestigung der Komponente zusammenwirkt. Der zweite Befestigungsabschnitt besteht aus einem weicheren Material als der erste Befestigungsabschnitt und bildet mit Letzterem eine im Wesentlichen formstabile Einheit aus.

US 11,255,362 B2 offenbart eine Halterungsbaugruppe umfassend einen Kern, ein mit dem Kern verbundenes Elastomerelement und einen mit dem Elastomerelement verbundenen Clip.

In Ausführungsformen kann der Clip so konfiguriert sein, dass er die Halterungsbaugruppe mit einer passenden Komponente verbindet. Ausführungsformen eines Clips können mehrere Stützelemente und mehrere Clipabschnitte umfassen. Ein Clip für eine Montagebaugruppe kann einen Flansch, eine Basis, mehrere Stützelemente, die sich in einer axialen Richtung zwischen dem Flansch und der Basis erstrecken, und mehrere Clipabschnitte umfassen, die sich von der Basis in Richtung und kurz vor dem Flansch erstrecken.

Nachteilig hieran ist, dass die entstehende Verbindung eine Rastverbindung mit vielen Clips darstellt, was die Demontage aufwendig macht.

Andererseits sollen entsprechende Schnappverbindungen für Wartungs- und Reparaturarbeiten leicht lösbar sein, bevorzugt werkzeuglos, was einen gewissen Zielkonflikt mit einer zuverlässigen Halterung darstellt.

Eine weitere bekannte Aufgabe solcher Schnappverbindungen ist Vibrationsisolation, insbesondere um das NVH-Verhalten zu optimieren. Daher sind Schnappverbindungen bekannt, die elastomere Materialien aufweisen.

Somit stellt sich die Aufgabe, die bekannten Nachteile zu überwinden und eine Schnappverbindung, eine Kraftfahrzeugstruktur sowie ein Kraftfahrzeug anzugeben, dass eine leichte Montage und Demontage mit einer zuverlässigen Halterung kombiniert und gleichzeitig ein gutes NVH-Verhalten aufweist.

Die Aufgabe wird gelöst durch eine Schnappverbindung gemäß Anspruch 1, eine Kraftfahrzeugstruktur gemäß dem nebengeordneten Anspruch 10 sowie ein Kraftfahrzeug gemäß dem nebengeordneten Anspruch 14. Weitere Ausgestaltungen sind Gegenstand der abhängigen Ansprüche.

Beschrieben wird eine Schnappverbindung eines Aggregatelagers eines Kraftfahrzeugs, mit einem Elastomerverbinder und einem Rastzapfen, wobei der Elastomerverbinder an einer Außenseite wenigstens eine erste Nut aufweist, die zur Festlegung an einer Haltestruktur vorgesehen ist, wobei der Elastomerverbinder eine Kavität oder Durchgangsausnehmung aufweist, wobei die Kavität oder Durchgangsausnehmung wenigstens eine erste Rastkontur aufweist, wobei der Rastzapfen wenigstens eine zweite Rastkontur aufweist, wobei der Rastzapfen in eine Einschubrichtung in die Kavität oder Durchgangsausnehmung einführbar und durch Zusammenwirken der wenigstens einen ersten Rastkontur und wenigstens einen zweiten Rastkontur einrastbar ist, wobei der Elastomerverbinder eine Kompressionsgeometrie besitzt, die dazu eingerichtet ist, bei Zug am Rastzapfen entgegen der Einschubrichtung zu komprimieren und dadurch den Elastomerverbinder im Bereich der wenigstens einen ersten Rastkontur zu verhärten, wobei die Kompressionsgeometrie eine Kompressionsnut ist.

Der Elastomerverbinder kann topfartig oder schlauchartig ausgestaltet sein, wobei verschiedene Aussenkonturen abhängig von der jeweiligen Anwendung möglich sind, die von rund über vieleckig bis hin zu Freiformen reichen. Die Wahl der passenden Geometrie und Ausgestaltung hängt vom jeweiligen geplanten Einsatzzweck ab.

Das Elastomer kann aus Naturkautschuk, Synthesekautschuk, PE, PU, Silikon und anderen Materialien bestehen. Das Elastomer kann verschiedene Zusatzstoffe aufweisen, um die Materialeigenschaften des Elastomers, z.B. Härte, Temperaturbeständigkeit, Abriebfestigkeit, Oberflächenrauigkeit und dergleichen einzustellen.

Das Elastomer bewirkt eine Vibrationsdämpfung, was das NVH-Verhalten eines entsprechend ausgerüsteten Kraftfahrzeugs verbessert.

Der Rastzapfen hat gegenüber dem Elastomerverbinder eine höhere Steifigkeit. Der Rastzapfen kann unter anderem aus Kunststoff oder Metall bestehen. Der Rastzapfen kann integraler Bestandteil einer Karosserie oder einer Komponente oder eines Aggregats sein. Zur Montage wird der Rastzapfen in die Kavität oder Durchgangsausnehmung eingeführt. Der Rastzapfen hat eine Geometrie, die ein Einführen in die Kavität oder Durchgangsausnehmung ermöglicht und einen festen Halt bei korrektem Sitz des Rastzapfens relativ zum Elastomerverbinder erlaubt.

Wenn eine entsprechende Kraft entgegen der Einschubrichtung aufgebracht wird, komprimiert die Kompressionsgeometrie und blockiert dadurch den Rastzapfen im Elastomerverbinder bis hin zu Kräften höher als die zur Montage notwendigen Kräfte. Durch die Kompressionsgeometrie kann somit erreicht werden, dass eine notwendige Kraft zum Lösen der Schnappverbindung entgegen der Einschubrichtung wesentlich höher ist als eine notwendige Kraft zum Schließen der Schnappverbindung in Einschubrichtung. Auf diese Weise kann eine einfache Montage mit sicherem Halt kombiniert werden.

Eine erste weiterführende Weiterbildung sieht vor, dass der Elastomerverbinder eine Anlagefläche aufweist, wobei der Rastzapfen einen Kragen aufweist, wobei der Kragen zumindest bei axialer Belastung des Rastzapfens in die Einschubrichtung mit der Anlagefläche in Anlage kommt.

Die Anlagefläche kann in die Kavität oder Durchgangsausnehmung vorspringen. Die Anlagefläche sowie der Kragen können abschnittsweise parallel zueinander ausgerichtet sein, um eine flächige Anlage von Kragen und Anlagefläche aneinander zu erreichen und dadurch eine bessere Kraftübertragung bei gleichzeitig niedrigerer Flächenbelastung der Komponenten.

Eine andere weiterführende Weiterbildung sieht vor, dass die wenigstens eine erste Rastkontur wenigstens einen Rastvorsprung und/oder Rastkragen und/oder Rastnut aufweist, wobei die wenigstens eine zweite Rastkontur wenigstens einen im Wesentlichen komplementären Rastvorsprung und/oder Rastkragen und/oder Rastnut aufweist.

Somit kann eine flächige Anlage der ersten Rastkontur und der zweiten Rastkontur aneinander erreicht werden.

Eine andere weiterführende Weiterbildung sieht vor, dass die erste Rastkontur und die zweite Rastkontur auf einer zur Einschubrichtung ausgerichteten Seite und/oder auf einer von der Einschubrichtung wegweisenden Seite Schrägen aufweisen, sodass die Verrastung zwischen Elastomerverbinder und Rastzapfen herstellbar und lösbar ist.

In Einschubrichtung können die Schrägen die notwendigen Einführkräfte reduzieren.

Entgegen der Einschubrichtung kann durch die Schrägen eine Blockade des Rastzapfens in dem Elastomerverbinder vermieden werden. Eine Blockade könnte eine Zerstörung von Rastzapfen und/oder Elastomerverbinder beim versuchten Lösen der Rastverbindung verursachen und ggf. weitere Beschädigungen nach sich ziehen.

Eine andere weiterführende Weiterbildung sieht vor, dass die erste Rastkontur in Einschubrichtung weiter vorne angeordnet ist als die erste Nut wobei die Kompressionsgeometrie axial zwischen der ersten Rastkontur und der ersten Nut oder auf der Höhe der ersten Rastkontur angeordnet ist.

Dabei ist eine Anlagefläche des Elastomerverbinders axial weiter vorne als die Kompressionsgeometrie angeordnet. Auf diese Weise werden Kräfte entgegen der Einschubrichtung, die über den Rastzapfen eingeleitet werden, über die betreffende Anlagefläche des Elastomerverbinders von einer anliegenden Gegenanlagefläche des Rastzapfens an die erste Rastkontur des Elastomerverbinders übertragen. Diese Kräfte weisen in Richtung der ersten Nut des Elastomerverbinders und fließen über die Kompressionsgeometrie. Dies führt in der Folge zu einer Deformation und Kompression oder gar zu einem Kollaps der Kompressionsgeometrie, was eine Materialanhäufung von Material des Elastomerverbinders oberhalb der zweiten Rastkontur des Rastzapfens bewirkt, sodass die Haltekräfte des Elastomerverbinders entgegen der Einschubrichtung ansteigen und der Rastzapfen sicher gehalten wird.

Eine andere weiterführende Weiterbildung sieht vor, dass der Elastomerverbinder an der Außenseite einen in Einschubrichtung weiter vorne angeordneten Greifbereich aufweist, wobei zur Demontage des Rastzapfens durch Zug am Greifbereich in Einschubrichtung eine Kompression der Kompressionsgeometrie verhindert werden kann.

Durch Zug am Greifbereich in Einschubrichtung kann eine Kompression oder ein Kollaps der Kompressionsgeometrie verhindert werden und die Rastkontur kann mit wesentlich niedrigeren Kräften entfernt werden als ohne Zug am Greifbereich, wodurch eine einfache Demontage ermöglicht wird.

Eine andere weiterführende Weiterbildung sieht vor, dass der Greifbereich wenigstens eine Haltewulst oder Greifgeometrie oder reibungserhöhende Struktur aufweist.

Dies erleichtert die Demontage.

Eine andere weiterführende Weiterbildung sieht vor, dass der Rastzapfen eine Stufenkontur aufweist.

Eine Stufenkontur erleichtert die Montage und Demontage des Rastzapfens gegenüber einer ungestuften Ausführung.

Eine andere weiterführende Weiterbildung sieht vor, dass der Rastzapfen aus Kunststoff oder Metall, insbesondere Aluminium, besteht.

Die Kompressionsnut kann mit einem leicht komprimierbaren Material gefüllt oder ungefüllt sein. Eine solche Nut kann bei der Herstellung des Elastomerverbinders leicht vorgesehen werden.

Ein erster unabhängiger Gegenstand betrifft eine Kraftfahrzeugstruktur, mit einem an einem Kraftfahrzeug mithilfe wenigstens einer Schnappverbindung der vorgenannten Art festgelegten Aggregat.

Eine erste weiterführende Weiterbildung sieht vor, dass wenigstens ein Rastzapfen an dem Aggregat angeordnet ist, wobei an einer Kraftfahrzeugkarosserie wenigstens ein Elastomerverbinder angeordnet ist.

Eine andere weiterführende Weiterbildung sieht vor, dass der wenigstens eine Rastzapfen beweglich an dem Aggregat angeordnet ist.

Eine weitere weiterführende Weiterbildung sieht vor, dass an der Kraftfahrzeugkarosserie wenigstens eine Haltekonsole mit einer Aufnahmenut und/oder Aufnahmeausnehmung zur Aufnahme des wenigstens einen Elastomerverbinders vorgesehen ist.

Die Haltekonsole kann in einer Ausgestaltung ein vom Elastomerverbinder separates Bauteil sein, in einer anderen Ausgestaltung mit dem Elastomerverbinder verbunden sein.

Ein weiterer unabhängiger Gegenstand betrifft ein Kraftfahrzeug mit wenigstens einer Kraftfahrzeugstruktur der vorgenannten Art.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Kraftfahrzeugstruktur mit einem Motorkühler, der mithilfe zweier Schnappverbindungen an einer Karosserie eines Kraftfahrzeugs festgelegt ist;
- Fig. 2: eine Frontalansicht auf die Kraftfahrzeugstruktur aus Fig. 1;
- Fig. 3: eine ausschnittsweise Vergrößerung aus Fig. 2;
- Fig. 4: eine frontale Schnittansicht auf die Kraftfahrzeugstruktur aus Fig. 1;
- Fig. 5: eine ausschnittsweise Vergrößerung aus Fig. 4, sowie
- Fig. 6A-E: verschiedene Phasen des Einführens, Blockierens und Entfernens eines Rastzapfens der Schnappverbindung.

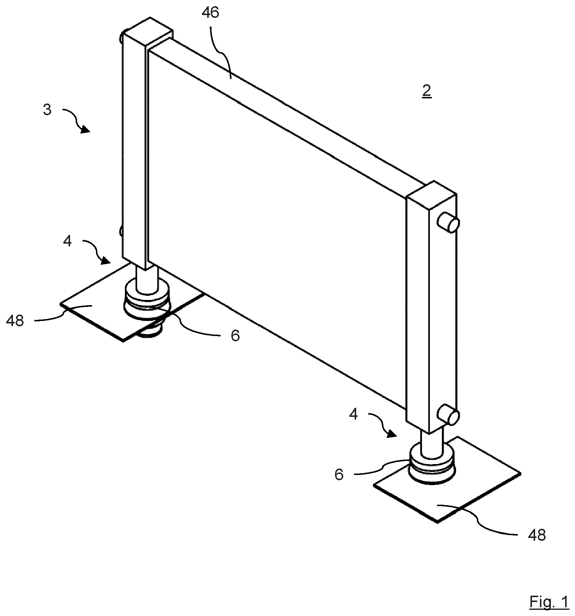

Fig. 1 zeigt eine perspektivische Ansicht eines Kraftfahrzeugs 2 mit einer Kraftfahrzeugstruktur 3 mit einem Motorkühler 46, der mithilfe zweier Schnappverbindungen 6 an einem Aggregatelager 4 festgelegt ist. Die Aggregatelager 4 sind an einer Karosserie 48 des Kraftfahrzeugs 2 angebunden.

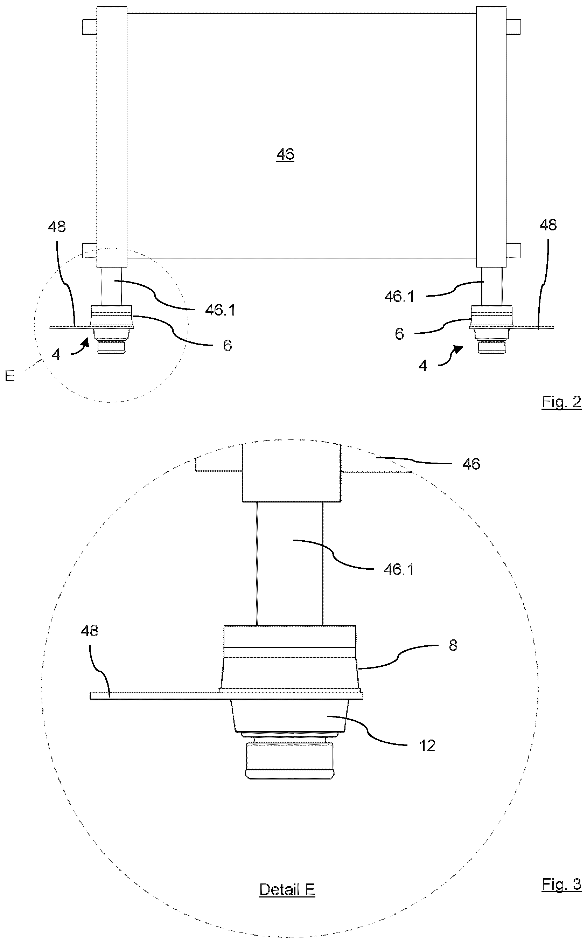

Fig. 2 zeigt eine Frontalansicht der Anordnung aus Fig. 1.

Die beiden Schnappverbindungen 6 sind auf gleicher Höhe angeordnet. Der Motorkühler 46 weist zwei Ständerrohre 46.1 auf, an deren Ende ein in Fig. 2 nicht sichtbarer kühlerseitig festgelegter Rastzapfen der Schnappverbindungen 6 angeordnet ist.

Fig. 3 zeigt eine Ausschnittsvergrößerung aus Fig. 2.

Die Schnappverbindung 6 weist einen an der Karosserie 48 festgelegten Elastomerverbinder 8 auf, in den der in Fig. 3 nicht sichtbare Rastzapfen des Motorkühlers 46 eingreift.

Der Elastomerverbinder 8 besteht aus vulkanisiertem Naturkautschuk.

Der Elastomerverbinder 8 ist rotationssymmetrisch.

An der Karosserie 48 ist in einem entsprechenden Ausschnitt eine Haltekonsole 12 angeordnet, in die der Elastomerverbinder 8 des Aggregatelagers 4 aufgenommen ist. Die Haltekonsole 12 besteht aus einem Kunststoff, der härter und abriebbeständiger als der Elastomerverbinder 8 ist. Die Haltekonsole 12 schützt somit den Elastomerverbinder 8 vor Beschädigungen an der Karosserie 48, die aus Metall besteht. Ohne Haltekonsole 12 bestünde die Gefahr einer Beschädigung des Elastomerverbinders 8 durch Einschneiden einer Kante der Karosserie 48 in den Elastomerverbinder 8.

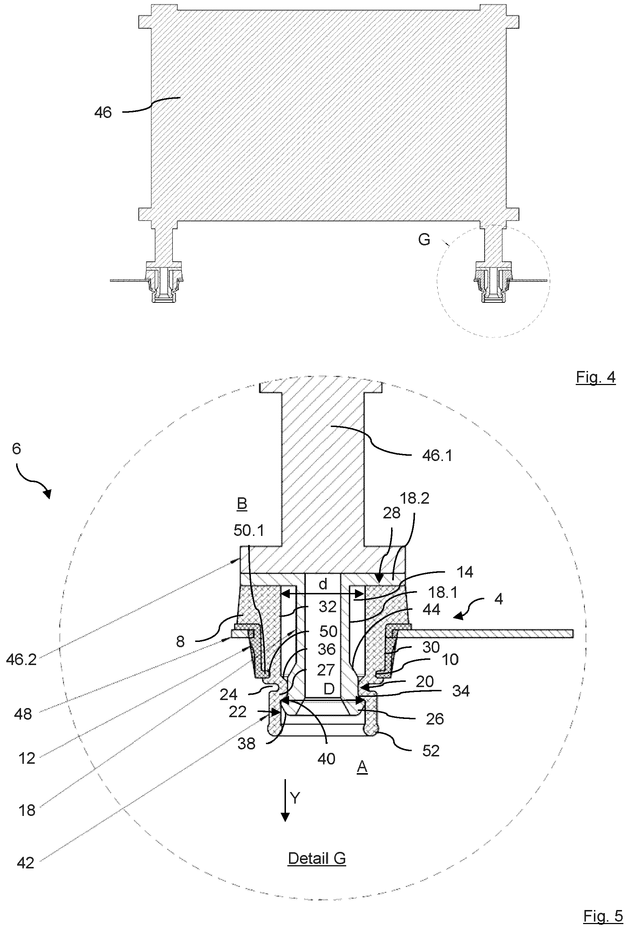

Fig. 4 zeigt eine frontale Schnittansicht durch die Kraftfahrzeugstruktur 3.

Fig. 5 zeigt eine abschnittsweise Vergrößerung des Details G aus Fig. 4.

Die Haltekonsole 12 weist eine Aufnahmeausnehmung 50 auf, in die der Elastomerverbinder 8 des Aggregatelagers 4 aufgenommen ist und in der der Elastomerverbinder 8 teilweise flächig mit einer Außenseite 30 anliegt. Die Ausnahmeausnehmung 50 weist hierzu einen nach innen ragenden Kragen 50.1 auf, der in eine erste Nut 10 des Elastomerverbinders 8 eingreift. Die erste Nut 10 ist an der Außenseite 30 des Elastomerverbinders 8 angeordnet und umlaufend ausgebildet.

Der Elastomerverbinder 8 weist eine Durchgangsausnehmung 14 auf, in der eine erste Rastkontur 20 ausgebildet ist. Die erste Rastkontur 20 ist an einem Rastkragen 27 ausgebildet, der als umlaufende Wulst in die Durchgangsausnehmung 14 hineinragt. Der Rastkragen 27 weist eine von einer von der Einschubrichtung Y wegweisenden Seite B ausgerichtete Schräge 36 und eine zu der Einschubrichtung Y hinweisende Seite A ausgerichtete Schräge 40 auf. Die Schrägen 36, 40 dienen zur zerstörungsfreien Montage und Demontage des Rastzapfens 18 an dem Elastomerverbinder 8.

An dem Ständerrohr 46.1 des Motorkühlers 46 ist ein Ständerrohrkragen 46.2 ausgebildet. Auf der dem Kragen 26 gegenüberliegenden Seite des Rastzapfens 18 ist am Rastzapfen 18 ein scheibenartiger Kragen 18.2 ausgebildet. Der Kragen 18.2 ist an den Ständerrohrkragen 46.2 geklebt. In anderen Ausführungsformen kann der Rastzapfen einstückig mit dem Ständerrohr 46 ausgebildet sein oder auf andere Weise befestigt sein, zum Beispiel geschraubt oder geschweißt.

Der Rastzapfen 18 weist eine zweite Rastkontur 22 auf, die an einem Kragen 26 ausgebildet ist. Der Kragen 26 hat einen größeren maximalen Durchmesser als ein Schaft 18.1 des Rastzapfens 18. Der Kragen 26 weist eine von einer von der Einschubrichtung Y wegweisenden Seite B ausgerichtete Schräge 34 und eine zu der Einschubrichtung Y hinweisende Seite A ausgerichtete Schräge 38 auf. Die Schrägen 34, 38 dienen zur zerstörungsfreien Montage und Demontage des Rastzapfens 18 an dem Elastomerkörper 8.

Der Rastzapfen 18 weist im Bereich in Einschubrichtung Y vor dem Kragen 26, also zur Seite B ausgerichtet, eine materialverdickende Stufenkontur 44 auf, um höhere Kräfte übertragen zu können.

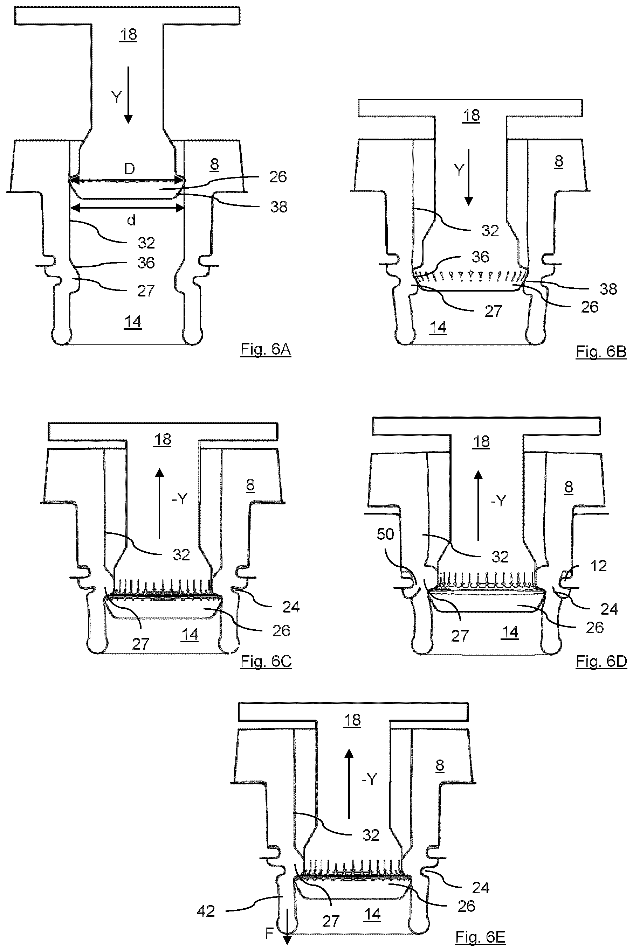

Wie in den Fig. 6A und 6B dargestellt, wird der Rastzapfen 18 in eine Einschubrichtung Y in die Durchgangsausnehmung 14 eingeschoben. Eine Innenseite 32 des Elastomerverbinders 8 weist in Einschubrichtung Y oberhalb der ersten Rastkontur 20 eine lichte Weite d auf, die im Wesentlichen einem maximalen Durchmesser D der zweiten Rastkontur 22 des Rastzapfens 18 entspricht. Die lichte Weite d kann im Bereich von 0 bis 2 mm kleiner oder im Bereich von 0 bis 4 mm größer oder gleich groß sein wie der maximale Durchmesser D der zweiten Rastkontur 22. Dies ermöglicht ein reibungsarmes Einschieben des Rastzapfens in die Durchgangsausnehmung 14.

Die Schräge 36 an der ersten Rastkontur 20 des Elastomerverbinders 8 und die entsprechende Schräge 38 des Rastzapfens 18 erleichtern beim Einschieben des Rastzapfens 18 in den Elastomerverbinder 8 ein temporäres Aufweiten des Rastkragens 27 des Elastomerverbinders 8 und ein Vorbeischieben des Kragens 26 des Rastzapfens 18 an dem Rastkragen 27 des Elastomerverbinders 8 vorbei.

Sobald die zweite Rastkontur 22 des Rastzapfens 18 die erste Rastkontur 20 des Elastomerverbinders 8 in Einschubrichtung Y axial passiert hat, kann sich das Material des Elastomerverbinders 8 wieder entspannen, bildet einen Formschluss mit dem Rastzapfen 18 und der Rastzapfen 18 ist eingeschnappt.

Durch die elastischen Eigenschaften des Elastomerverbinders 8 werden Vibrationen gedämpft, was ein Übertragen von Körperschall von dem Motorkühler 46 auf die Karosserie 48 und umgekehrt weitgehend unterbindet und somit eine Geräuschfortpflanzung im Kraftfahrzeug 2 verhindert.

Der Elastomerverbinder 8 weist eine Anlagefläche 28 auf, an der Rastzapfen 18 mit dem am Schaft 18.1 angeordneten Kragen 18.2 flächig anliegt. Dies erhöht die Stabilität der Schnappverbindung 6 und ermöglicht eine flächigere Kraftübertragung zwischen Motorkühler 46 und Aggregatelager 4.

An der Außenseite 30 des Elastomerverbinders 8 ist desweiteren eine umlaufende Kompressionsnut 24 angeordnet, die in Einschubrichtung Y betrachtet auf einer Höhe zwischen im Wesentlichen auf der Höhe der ersten Rastkontur 20 liegt, wobei eine Schräge 34 des Elastomerverbinders 8, an der eine Schräge 40 des Rastzapfens 18 im dargestellten verrasteten Zustand anliegt, in Einschubrichtung Y betrachtet weiter vorne liegt als die Kompressionsnut 24. Bei Zug am Rastzapfen 18 entgegen der Einschubrichtung Y, zum Beispiel übertragen vom Motorkühler 46 und dem Ständerrohr 46.1 durch dynamische Kräfte während der Fahrt, wirken diese Kräfte auf die Kompressionsnut 24, die dadurch bedingt erst teilweise und bei größeren Kräften vollständig kollabiert. Dies bewirkt eine zusätzliche Materialanstauung im Bereich des Kragens 50.1 der Aufnahmeausnehmung 50 der Haltekonsole 12, wodurch der Widerstand entgegen der Einschubrichtung Y erheblich ansteigt und ein Ausrasten des Rastzapfens 18 entsprechend erschwert wird. Gleichzeitig wird eine geringe axiale Amplitude ermöglicht, die vom Elastomerverbinder 8 bedämpft ist, was weiterhin zur Geräuschreduzierung beiträgt.

Der Elastomerverbinder 8 weist an der Außenseite 30 einen in Einschubrichtung Y weiter vorne angeordneten Greifbereich 42 auf, an dessen stirnseitigen Ende eine Haltewulst 52 ausgebildet ist. Zur Demontage des Motorkühlers 46 wird der Elastomerverbinder 8 im Greifbereich gegriffen und Zug in Einschubrichtung Y ausgeübt. Hierdurch kann, wie in Fig. 6 E dargestellt ist, eine Kompression der Kompressionsnut 24 verhindert werden und der Kragen 26 des Rastzapfens 18 kann an dem Rastkragen 27 des Elastomerverbinders 8 mittels der entsprechenden Schrägen 34, 40 vorbeigleiten.

Die Fig. 6A bis 6E zeigen verschiedene Zustände der Schnappverbindung 6.

In Fig. 6A und 6B ist jeweils eine Montage des Rastzapfens 18 dargestellt. In Fig. 6A wird der Rastzapfen 18 in die Durchgangsausnehmung 14 in Einschubrichtung Y eingeschoben und gleitet entlang der Innenseite 32 des Elastomerverbinders 8.

Beim in Fig. 6B dargestellten Auftreffen des Kragens 26 des Rastzapfens 18 auf den Rastkragen 27 des Elastomerverbinders 8 wird der Rastkragen 27 des Elastomerverbinders 27 durch Zusammenwirken der Schrägen 36, 38 an Elastomerverbinder 8 und Rastzapfen 18 auseinandergedehnt und erlaubt ein Passieren des Kragens 26 des Rastzapfens 18 und damit ein Verschnappen. Der verschnappte Zustand ist in Fig. 5 dargestellt.

Die Fig. 6C und 6D zeigen einen Belastungszustand mit einer Bewegungskomponente entgegen der Einschubrichtung Y. Durch die dabei vom Rastzapfen 18 auf den Elastomerverbinder 8 übertragenen Kräfte wird die Kompressionsnut 24 zuerst teilweise (Fig. 6C) und später vollständig (Fig. 6D) kollabiert, wodurch sich der Rastkragen 27 des Elastomerverbinders 8 zu einer dicken Wulst verdickt, die sich vor dem Kragen 26 des Rastzapfens 18 befindet und ein Herausrutschen des Rastzapfens 18 verhindert, da sie die Aufnahmeausnehmung 50 der Haltekonsole 12 blockiert.

Fig. 6E zeigt, dass bei einer gewollten Demontage des Rastzapfens 18 an dem Greifbereich 42 des Elastomerverbinders 8 mit einer Haltekraft F in Einschubrichtung Y gezogen werden kann, um ein Kollabieren der Kompressionsnut 24 zu verhindern, wodurch der Kragen 26 des Rastzapfens 18 an dem Rastkragen 27 des Elastomerverbinders 8 vorbeigeführt werden kann.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein, solange diese Kombinationen unter den Wortlaut der beigefügten Ansprüche fallen.

### Bezugszeichenliste

- 2: Kraftfahrzeug
- 3: Kraftfahrzeugstruktur
- 4: Aggregatelager
- 6: Schnappverbindung
- 8: Elastomerverbinder
- 10: erste Nut
- 12: Haltekonsole
- 14: Durchgangsausnehmung
- 18: Rastzapfen
- 18.1: Schaft
- 18.2: Kragen
- 20: erste Rastkontur
- 22: zweite Rastkontur
- 24: Kompressionsnut
- 26: Kragen
- 27: Rastkragen
- 28: Anlagefläche
- 30: Außenseite
- 32: Innenseite
- 34-40: Schräge
- 42: Greifbereich
- 44: Stufenkontur
- 46: Motorkühler
- 46.1: Ständerrohr
- 46.2: Ständerrohrkragen
- 48: Karosserie
- 50: Aufnahmeausnehmung
- 50.1: Kragen
- 52: Haltewulst
- A: Zur Einschubrichtung hinweisende Seite
- B: Von Einschubrichtung wegweisende Seite
- d: lichte Weite
- D: maximaler Durchmesser
- F: Haltekraft
- Y: Einschubrichtung

## Patentansprüche

1. Schnappverbindung (6) eines Aggregatelagers (4) eines Kraftfahrzeugs (2), mit einem Elastomerverbinder (8) und einem Rastzapfen (18), wobei der Elastomerverbinder (8) an einer Außenseite (30) wenigstens eine erste Nut (10) aufweist, die zur Festlegung an einer Haltestruktur (12) vorgesehen ist, wobei der Elastomerverbinder (8) eine Kavität oder Durchgangsausnehmung (14) aufweist, wobei die Kavität oder Durchgangsausnehmung (14) wenigstens eine erste Rastkontur (20) aufweist, wobei der Rastzapfen (18) wenigstens eine zweite Rastkontur (22) aufweist, wobei der Rastzapfen (18) in eine Einschubrichtung (Y) in die Kavität oder Durchgangsausnehmung (14) einführbar und durch Zusammenwirken der wenigstens einen ersten Rastkontur (20) und wenigstens einen zweiten Rastkontur (22) einrastbar ist, wobei der Elastomerverbinder (8) eine Kompressionsgeometrie (24) besitzt, die dazu eingerichtet ist, bei Zug am Rastzapfen (18) entgegen der Einschubrichtung (Y) zu komprimieren und dadurch den Elastomerverbinder (8) im Bereich der wenigstens einen ersten Rastkontur (20) zu verhärten, **dadurch gekennzeichnet, dass** die Kompressionsgeometrie eine Kompressionsnut (24) ist.

2. Schnappverbindung (6) nach Anspruch 1, wobei der Elastomerverbinder (8) eine Anlagefläche (28) aufweist, wobei der Rastzapfen (18) einen Kragen (26) aufweist, wobei der Kragen (26) zumindest bei axialer Belastung des Rastzapfens (18) in die Einschubrichtung (Y) mit der Anlagefläche (28) in Anlage kommt.

3. Schnappverbindung (6) nach Anspruch 1 oder 2, wobei die wenigstens eine erste Rastkontur (20) wenigstens einen Rastvorsprung und/oder Rastkragen (26) und/oder Rastnut aufweist, wobei die wenigstens eine zweite Rastkontur (22) wenigstens einen im Wesentlichen komplementären Rastvorsprung und/oder Rastkragen (26) und/oder Rastnut aufweist.

4. Schnappverbindung (6) nach Anspruch 3, wobei die erste Rastkontur (20) und die zweite Rastkontur (22) auf einer zur Einschubrichtung (Y) ausgerichteten Seite (A) und/oder auf einer von der Einschubrichtung (Y) wegweisenden Seite (B) Schrägen (34, 36, 38, 40) aufweisen, sodass die Verrastung zwischen Elastomerverbinder (8) und Rastzapfen (18) herstellbar und lösbar ist.

5. Schnappverbindung (6) nach einem der vorangegangenen Ansprüche, wobei die erste Rastkontur (20) in Einschubrichtung (Y) weiter vorne angeordnet ist als die erste Nut (10) wobei die Kompressionsgeometrie (24) axial zwischen der ersten Rastkontur (20) und der ersten Nut (10) oder auf der Höhe der ersten Rastkontur (20) angeordnet ist.

6. Schnappverbindung (6) nach einem der vorangegangenen Ansprüche, wobei der Elastomerverbinder (8) an der Außenseite (30) einen in Einschubrichtung (Y) weiter vorne angeordneten Greifbereich (42) aufweist, wobei zur Demontage des Rastzapfens (18) durch Zug am Greifbereich (42) in Einschubrichtung (Y) eine Kompression der Kompressionsgeometrie (24) verhindert werden kann.

7. Schnappverbindung (6) nach Anspruch 6, wobei der Greifbereich (42) wenigstens eine Haltewulst (52) oder Greifgeometrie oder reibungserhöhende Struktur aufweist.

8. Schnappverbindung (6) nach einem der vorangegangenen Ansprüche, wobei der Rastzapfen (18) eine Stufenkontur (44) aufweist.

9. Schnappverbindung (6) nach einem der vorangegangenen Ansprüche, wobei der Rastzapfen (18) aus Kunststoff oder Metall, insbesondere Aluminium, besteht.

10. Kraftfahrzeugstruktur (3), mit einem an einem Kraftfahrzeug (2) mithilfe wenigstens einer Schnappverbindung (6) nach einem der vorangegangenen Ansprüche festgelegten Aggregat (46).

11. Kraftfahrzeugstruktur (3) nach Anspruch 10, wobei wenigstens ein Rastzapfen (18) an dem Aggregat (46) angeordnet ist, wobei an einer Kraftfahrzeugkarosserie (48) wenigstens ein Elastomerverbinder (8) angeordnet ist.

12. Kraftfahrzeugstruktur (3) nach Anspruch 10 oder 11, wobei der wenigstens eine Rastzapfen (18) beweglich an dem Aggregat (46) angeordnet ist.

13. Kraftfahrzeugstruktur (3) nach einem der Ansprüche 10 bis 12, wobei an der Kraftfahrzeugkarosserie (48) wenigstens eine Haltekonsole (12) mit einer Aufnahmenut und/oder Aufnahmeausnehmung (50) zur Aufnahme des wenigstens einen Elastomerverbinders (8) vorgesehen ist.

14. Kraftfahrzeug (2) mit wenigstens einer Kraftfahrzeugstruktur (3) nach einem der Ansprüche 10 bis 13.

## Claims

1. Snap-fit connection (6) for a power unit mount (4) of a motor vehicle (2), comprising an elastomeric connector (8) and a latching pin (18), wherein the elastomeric connector (8) has, on an outer surface (30), at least one first groove (10) intended for securing to a support structure (12), wherein the elastomeric connector (8) comprises a cavity or through recess (14), wherein the cavity or through recess (14) comprises at least one first latching contour (20), wherein the latching pin (18) comprises at least one second latching contour (22), wherein the latching pin (18) can be inserted in an insertion direction (Y) into the cavity or through recess (14) and can be snapped into place by the interaction of the at least one first latching contour (20) and the at least one second latching contour (22), wherein the elastomer connector (8) has a compression geometry (24) which is designed to compress when the latching pin (18) is pulled in the direction opposite to the insertion direction (Y), thereby stiffening the elastomer connector (8) in the region of the at least one first latching contour (20), **characterised in that** the compression geometry is a compression groove (24).

2. Snap-fit connection (6) according to claim 1, wherein the elastomer connector (8) comprises a contact surface (28), wherein the latching pin (18) comprises a collar (26), wherein the collar (26) comes into contact with the contact surface (28) at least when the latching pin (18) is subjected to axial loading in the insertion direction (Y).

3. Snap-fit connection (6) according to claim 1 or 2, wherein the at least one first latching contour (20) comprises at least one latching projection and/or latching collar (26) and/or latching groove, and wherein the at least one second latching contour (22) comprises at least one substantially complementary latching projection and/or latching collar (26) and/or latching groove.

4. Snap-fit connection (6) according to claim 3, wherein the first latching contour (20) and the second latching contour (22) comprise chamfers (34, 36, 38, 40) on a side (A) aligned with the insertion direction (Y) and/or on a side (B) facing away from the insertion direction (Y), so that the locking between the elastomer connector (8) and the latching pin (18) can be established and released.

5. Snap-fit connection (6) according to one of the preceding claims, wherein the first latching contour (20) is arranged further forward in the insertion direction (Y) than the first groove (10), wherein the compression geometry (24) is arranged axially between the first latching contour (20) and the first groove (10) or at the level of the first latching contour (20).

6. Snap-fit connection (6) according to one of the preceding claims, wherein the elastomer connector (8) has, on its outer surface (30), a gripping region (42) situated further forward in the insertion direction (Y), whereby, for the removal of the latching pin (18) by pulling on the gripping region (42) in the insertion direction (Y), compression of the compression geometry (24) can be prevented.

7. Snap-fit connection (6) according to claim 6, wherein the gripping region (42) comprises at least one retaining bead (52) or gripping geometry or friction-enhancing structure.

8. Snap-fit connection (6) according to one of the preceding claims, wherein the latching pin (18) has a stepped contour (44).

9. Snap-fit connection (6) according to one of the preceding claims, wherein the latching pin (18) is made of plastic or metal, in particular aluminium.

10. Motor vehicle structure (3), comprising an assembly (46) secured to a motor vehicle (2) by means of at least one snap-fit connection (6) according to one of the preceding claims.

11. Motor vehicle structure (3) according to claim 10, wherein at least one latching pin (18) is arranged on the assembly (46), and at least one elastomeric connector (8) is arranged on a motor vehicle body (48).

12. Motor vehicle structure (3) according to claim 10 or 11, wherein the at least one latching pin (18) is movably arranged on the assembly (46).

13. Motor vehicle structure (3) according to any one of claims 10 to 12, wherein at least one support bracket (12) with a receiving groove and/or receiving recess (50) for receiving the at least one elastomer connector (8) is provided on the motor vehicle body (48).

14. Motor vehicle (2) comprising at least one motor vehicle structure (3) according to any one of claims 10 to 13.

## Revendications

1. Connecteur à encliquetage (6) d'un support de groupe motopropulseur (4) d'un véhicule automobile (2), comprenant un connecteur en élastomère (8) et un tenon d'encliquetage (18), le connecteur en élastomère (8) présentant, sur une face extérieure (30), au moins une première rainure (10) destinée à la fixation sur une structure de support (12), le connecteur en élastomère (8) comportant une cavité ou un évidement traversant (14), ladite cavité ou ledit évidement traversant (14) comportant au moins un premier contour d'encliquetage (20), le tenon d'encliquetage (18) comportant au moins un deuxième contour d'encliquetage (22), le tenon d'encliquetage (18) pouvant être inséré dans une direction d'insertion (Y) dans la cavité ou l'évidement traversant (14) et peut s'encliqueter grâce à l'interaction entre ledit au moins un premier contour d'encliquetage (20) et ledit au moins un deuxième contour d'encliquetage (22), le connecteur en élastomère (8) possédant une géométrie de compression (24) qui est conçue pour se comprimer lorsqu'une traction est exercée sur le tenon d'encliquetage (18) dans le sens opposé à la direction d'insertion (Y) et, de ce fait, de durcir le connecteur en élastomère (8) au niveau dudit au moins un premier contour d'encliquetage (20), **caractérisé en ce que** la géométrie de compression est une rainure de compression (24).

2. Connecteur à encliquetage (6) selon la revendication 1, dans laquelle le connecteur en élastomère (8) présente une surface d'appui (28), le tenon d'encliquetage (18) présente un collet (26), et le collet (26) vient en appui contre la surface d'appui (28) au moins lorsque le tenon d'encliquetage (18) est soumis à une contrainte axiale dans la direction d'insertion (Y).

3. Connecteur à encliquetage (6) selon la revendication 1 ou 2, dans laquelle le au moins un premier contour d'encliquetage (20) comporte au moins une saillie d'encliquetage et/ou un collet d'encliquetage (26) et/ou une rainure d'encliquetage, et dans laquelle le au moins un deuxième contour d'encliquetage (22) comporte au moins une saillie d'encliquetage et/ou un collet d'encliquetage (26) et/ou une rainure d'encliquetage sensiblement complémentaires.

4. Connecteur à encliquetage (6) selon la revendication 3, dans lequel le premier contour d'encliquetage (20) et le deuxième contour d'encliquetage (22) présentent, sur un côté (A) orienté vers la direction d'insertion (Y) et/ou sur un côté (B) opposé à la direction d'insertion (Y), des biseaux (34, 36, 38, 40), de sorte que l'encliquetage entre le connecteur en élastomère (8) et le tenon d'encliquetage (18) puisse être établi et libéré.

5. Connecteur à encliquetage (6) selon l'une des revendications précédentes, le premier contour d'encliquetage (20) étant disposé plus en avant dans la direction d'insertion (Y) que la première rainure (10), la géométrie de compression (24) étant disposée axialement entre le premier contour d'encliquetage (20) et la première rainure (10) ou au niveau du premier contour d'encliquetage (20).

6. Connecteur à encliquetage (6) selon l'une des revendications précédentes, dans lequel le connecteur en élastomère (8) présente, sur sa face extérieure (30), une zone de préhension (42) disposée plus en avant dans la direction d'insertion (Y), la compression de la géométrie de compression (24) pouvant être empêchée lors du démontage du tenon d'encliquetage (18) par traction sur la zone de préhension (42) dans la direction d'insertion (Y).

7. Connecteur à encliquetage (6) selon la revendication 6, dans lequel la zone de préhension (42) comporte au moins un bourrelet de retenue (52), une géométrie de préhension ou une structure augmentant le frottement.

8. Connecteur à encliquetage (6) selon l'une des revendications précédentes, dans lequel le tenon d'encliquetage (18) présente un profil en gradins (44).

9. Connecteur à encliquetage (6) selon l'une des revendications précédentes, dans lequel le tenon d'encliquetage (18) est en matière plastique ou en métal, en particulier en aluminium.

10. Structure de véhicule automobile (3), comprenant une ensemble (46) fixée à un véhicule automobile (2) à l'aide d'au moins un connecteur à encliquetage (6) selon l'une des revendications précédentes.

11. Structure de véhicule automobile (3) selon la revendication 10, dans laquelle au moins un tenon d'encliquetage (18) est disposé sur l'ensemble (46), et au moins un connecteur en élastomère (8) est disposé sur une carrosserie de véhicule automobile (48).

12. Structure de véhicule automobile (3) selon la revendication 10 ou 11, dans laquelle ledit au moins un tenon d'encliquetage (18) est disposé de manière mobile sur l'ensemble (46).

13. Structure de véhicule automobile (3) selon l'une des revendications 10 à 12, dans laquelle au moins une console de fixation (12) comportant une rainure de logement et/ou un évidement de logement (50) destiné à recevoir ledit au moins un connecteur en élastomère (8) est prévue sur la carrosserie de véhicule automobile (48).

14. Véhicule automobile (2) comportant au moins une structure de véhicule automobile (3) selon l'une des revendications 10 à 13.
